# EUROPÄISCHE PATENTSCHRIFT

(11) **EP 2 825 038 B1**
(45) Veröffentlichungstag und Bekanntmachung des Hinweises auf die Patenterteilung: **11.10.2017**
(21) Anmeldenummer: 13715620.4
(22) Anmeldetag: 15.03.2013
(51) Int. Cl.: A01N 1/02

(54) **ORGANLAGERLÖSUNG ENTHALTEND (HYDROXY)ECTOIN**
ORGANSTORAGE SOLUTION COMPRISING (HYDROXY)ECTOINE
SOLUTION POUR LA PRESERVATION DES ORGANES COMPRENANT DU (HYDROXY)ECTOINE

(30) Priorität: 16.03.2012 DE 102012005177
(43) Veröffentlichungstag der Anmeldung: 21.01.2015
(73) Patentinhaber: bitop AG, 58453 Witten (DE)
(72) Erfinder: BILSTEIN, Andreas, 50129 Bergheim (DE); LENTZEN, Georg, 46483 Wesel (DE); TOLBA, Rene, 52074 Aachen (DE); QUESNEL, Fabián, Bernal, E-08028 Barcelona (ES)
(74) Vertreter: Schöneborn, Holger
(86) Internationale Anmeldenummer: PCT/EP2013/055378
(87) Internationale Veröffentlichungsnummer: WO 2013/135867

(56) Entgegenhaltungen:
- WO-A1-2009/095269
- DE-A1- 4 244 580
- "44788/81619 Ectoin", , 23. Dezember 2010 (2010-12-23), Seiten 1-1, XP055065349, Buchs, Switzerland Gefunden im Internet: URL:http://www.sigmaaldrich.com/etc/medial ib/docs/Fluka/Datasheet/81619dat.Par.0001. File.tmp/81619dat.pdf [gefunden am 2013-06-05]
- "Hydroxyectoin", , 23. Dezember 2010 (2010-12-23), Seiten 1-1, XP055065394, Buchs, Switzerland Gefunden im Internet: URL:http://www.sigmaaldrich.com/etc/medial ib/docs/Fluka/Datasheet/70709dat.Par.0001. File.tmp/70709dat.pdf [gefunden am 2013-06-05]
- "Ectoin - Mode of Action", , 9. April 2010 (2010-04-09), Seiten 1-10, XP055065415, Witten, Germany Gefunden im Internet: URL:http://www.bitop.de/root/img/pool/down loads/bitop_basisbroschuere/bitop_mode_of_ action_ectoin.pdf [gefunden am 2013-06-05]
- J H SOUTHARD ET AL: "Important Components of the UW Solution", TRANSPLANTATION, Bd. 49, Nr. 2, 1. Februar 1990 (1990-02-01), Seiten 251-257, XP55045513,
- HERMANN JANSSEN ET AL: "UW is superior to Celsior and HTK in the protection of human liver endothelial cells against preservation injury", LIVER TRANSPLANTATION, Bd. 10, Nr. 12, 1. Januar 2004 (2004-01-01), Seiten 1514-1523, XP055065458, ISSN: 1527-6465, DOI: 10.1002/lt.20309
- LAI WEI, ANNIKA WEDEKING, REINHARD BÜTTNER, JÖRG C KAFF, RENÉ H TOLBA, GERHILD VAN ECHTEN-DECKERT: "A natural tetrahydropyrimidine protects small bowel from cold ischemia and subsequent warm in vitro reperfusion injury.", PATHOBIOLOGY, Bd. 76, Nr. 4, 29. Juni 2009 (2009-06-29), Seiten 212-220, XP009170089, Basel, Switzerland ISSN: 1015-2008, DOI: 10.1159/000218338
- Lai Wei ET AL: "Experimental small bowel preservation using Polysol: A new alternative to University of Wisconsin solution, Celsior and histidine-tryptophan-ketoglutarate solution?", World J Gastroenterol, 21. Juli 2007 (2007-07-21), Seiten 3684-3691, XP055065487, Gefunden im Internet: URL:http://www.wjgnet.com/1007-9327/13/368 4.pdf [gefunden am 2013-06-05]
- PASTOR J M ET AL: "Ectoines in cell stress protection: Uses and biotechnological production", BIOTECHNOLOGY ADVANCES, ELSEVIER PUBLISHING, BARKING, GB, Bd. 28, Nr. 6, 1. November 2010 (2010-11-01), Seiten 782-801, XP027331818, ISSN: 0734-9750 [gefunden am 2010-07-01]
- Balaz P ET AL: "Preservation injury of the small bowel graft in clinical small bowel transplantation", Bratisl Lek Listy, 1 January 2007 (2007-01-01), pages 516-518, XP55253162, Retrieved from the Internet: URL:http://bmj.fmed.uniba.sk/2007/10812-06 .pdf
- Koichiro Hata ET AL: "Impact of polysol, a newly developed preservation solution, on cold storage of steatotic rat livers", LIVER TRANSPLANTATION, vol. 13, no. 1, 1 January 2007 (2007-01-01), pages 114-121, XP055253234, US ISSN: 1527-6465, DOI: 10.1002/lt.20957

## Beschreibung

Die Erfindung betrifft eine Lagerlösung zur Aufbewahrung von Transplantationsorganen oder -geweben.

Die Transplantation von Organen, insbesondere Niere, Herz, Leber, Bauchspeicheldrüse und Lunge, spielt in der modernen Medizin eine bedeutende Rolle. Die Transplantation eines Organs kann beispielsweise notwendig sein bei chronischer Niereninsuffizienz, bestimmten koronaren Herzkrankheiten oder Leberzirrhose. Die Mehrzahl an Transplantationen wird mit Organen von hirntoten Spendern durchgeführt, weshalb von der Zeit der Entnahme bis zum Auffinden und Vorbereiten eines geeigneten Empfängers eine gewisse Zeit verstreicht, sodass eine Konservierung des Organs erforderlich ist. Das Organ verbleibt somit eine gewisse Zeit lang ohne Sauerstoffzufuhr, d. h. es durchläuft eine ischämische Phase mit einer entsprechenden reversiblen Schädigung. Das Organ wird typischerweise bei niedriger Temperatur von ca. 4°C aufbewahrt oder transportiert. Bei der Ischämie wird zwischen der sog. warmen Ischämiezeit, d. h. dem Zeitraum zwischen der Unterbrechung der Durchblutung im Spenderkörper und dem Beginn der Kälteperfusion, und der kalten Ischämiezeit, nämlich dem Beginn der Kälteperfusion und der Einpflanzung im Empfängerorganismus, unterschieden. Bei kühler Lagerung in entsprechenden Organlagerlösungen kann die kalte Ischämiezeit im Falle einer Nierentransplantation auf bis zu 48 Stunden ausgedehnt werden.

Bei der Entnahme eines Organs wird dieses typischerweise mit einer Perfusionslösung durchspült und in dieser gelagert. Eine häufig verwendete Lösung ist die sog. UW-Lösung (University of Wisconsin) bei der die lonenkonzentration der Konzentration in den Zellen entspricht. Eine andere häufig verwendete Organlagerlösung ist die HTK-Lösung die u. a. durch die Dr. Franz Köhler Chemie GmbH, Bensheim, Deutschland unter dem Namen Custodiol vertrieben wird. Die Abkürzung HTK steht für die Inhaltsstoffe Histidin, Tryptophan und α-Ketoglutarat. Eine weitere bekannte Organlagerlösung wird unter dem Namen Celsior von der Firma Genzyme, Cambridge, USA vertrieben. Die Eigenschaften verschiedener Organlagerlösungen zur Lagerung von Lebertransplantaten werden in der Veröffentlichung H. Janßen et al., Liver Transplantation, Vol. 10, 2004, S. 1514-1523 verglichen.

Im Laufe der Zeit hat man versucht, durch weitere Verbesserungen Schädigungen des zu transplantierenden Organs zu minimieren. Neben der Schädigung durch die Ischämie selbst steht dabei auch die Vermeidung von sog. Reperfusionsschäden im Vordergrund, die auftreten, wenn das hypotherme Organ erwärmt und mit Blut reperfundiert wird. Aus diesem Grund schlägt das europäische Patent EP 1 362 511 B1 vor, der Organlagerlösung ein Hydroxamsäurederivat zuzufügen. Das Patent EP 1 859 679 B1 schlägt vor, einen Puffer auf Basis von N-Acetylhistidin/Base einzusetzen.

Ausgehend von diesem Stand der Technik stellte sich die Aufgabe, die Ischämie- und Reperfusionsschäden bei der Transplantation von Organen, Geweben und Organsystemen weiter zu verringern.

Diese Aufgabe wird erfindungsgemäß gelöst durch Verwendung einer Lagerlösung nach Anspruch 1.

Es hat sich überraschend herausgestellt, dass die Schäden an den in einer Lagerlösung aufbewahrten und mit der Lagerlösung perfundierten Organen und Geweben Niere, Leber, Pankreas und Cornea sich herabsetzen lassen, wenn der Lagerlösung Ectoin (2-Methyl-1,4,5,6-tetrahydropyrimidin-4-carbonsäure) oder Hydroxyectoin (5-Hydroxy-2-methyl-1,4,5,6-tetrahydropyrimidin-4-carbonsäure) bzw. ein Salz dieser Verbindungen zugesetzt wird. Ectoin ist ein Tetrahydropyrimidinderivat, das unter Stressbedingungen von extremophilen, insbesondere halophilen Mikroorganismen synthetisiert wird. Für Ectoin und Hydroxyectoin wurden bislang verschiedene Verwendungen beschrieben, beispielsweise als Moisturizer, zur Behandlung des Vascular Leak Syndrom (VLS) (DE 10 2006 056 766 A1) oder zur Behandlung von Neurodermitis (DE 103 30 243 A1). Auch die Verwendung bei der Vorbeugung oder Behandlung von postoperativem Entzündungsstress wurde in der internationalen Patentanmeldung WO 2009/095269 A1 offenbart. Dabei wird auch erwähnt, dass sich die bei der Transplantation von Darmabschnitten einstellenden Entzündungsreaktionen durch Verwendung von Ectoin vermindern lassen, der Zusatz von Ectoin oder Hydroxyectoin zu einer HTK-Lösung wird in dieser Druckschrift jedoch nicht beschrieben. Für den Fachmann war es somit überraschend, dass sich die Eigenschaften dieser kommerziell erhältlichen und bewährten Organlagerlösung durch Zusatz von Ectoin/Hydroxyectoin weiter verbessern lassen. Bei den Lösungen handelt es sich in der Regel um wässrige Lösungen.

Im Zusammenhang mit der Aufbewahrung von Dünndarmtransplantaten war die Verwendbarkeit von Ectoin in Polysollösung bereits durch L. Wei et al., Pathobiology, Vol. 76, 2009, S. 212-220 beschrieben worden, die Veröffentlichung äußert sich jedoch nicht zur Verwendung von Ectoin in Kombination mit einer HTK-Lösung oder im Zusammenhang mit der Transplantation von Niere, Leber, Pankreas oder Cornea.

Die Struktur des natürlichen L-Ectoins ((S)-2-Methyl-1,4,5,6-tetrahydropyrimidin-4-carbonsäure) ist im Folgenden dargestellt:

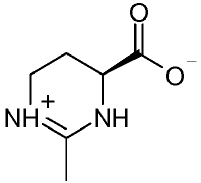

Die Struktur des natürlichen Hydroxyectoins ((4S,5S)-5-Hydroxy-2-methyl-1,4,5,6-tetrahydropyrimidin-4-carbonsäure) wird im Folgenden wiedergegeben:

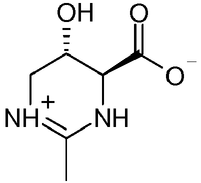

Die Verwendung der angegebenen Stereoisomere ist bevorzugt, jedoch nicht obligatorisch, d.h. auch die Verwendung anderer Stereoisomere bzw. des Racemats ist möglich.

Besonders bevorzugt ist die Verwendung von Hydroxyectoin. Als Basis dient eine HTK-Lösung, d. h. eine Lagerlösung, die Histidin, Tryptophan und α-Ketoglutarat oder entsprechende Salze enthält. Ganz besonders bevorzugt ist die Verwendung von Hydroxyectoin bzw. einem Salz des Hydroxyectoins in einer Lagerlösung, die Histidin, Tryptophan und α-Ketoglutarat oder entsprechende Salze enthält.

Die Konzentration von Ectoin/Hydroxyectoin sollte zwischen 0,1 und 100 mM betragen. Bevorzugt sind Konzentrationen zwischen 1 und 10 mM, besonders bevorzugt 4 bis 7 mM und ganz besonders bevorzugt ca. 5 mM. Bei entsprechenden Konzentrationen konnte eine signifikante Verringerung der Organschäden beobachtet werden.

Eine typische, wässrige HTK-Lösung enthält:

| | |
|---|---|
| Natriumchlorid | 15,0 mM |
| Kaliumchlorid | 9,0 mM |
| Magnesiumchlorid Hexahydrat | 4,0 mM |
| Histidinhydrochlorid Monohydrat | 18,0 mM |
| Histidin | 180,0 mM |
| Tryptophan | 2,0 mM |
| Mannitol | 30,0 mM |
| Calciumchlorid Dihydrat | 0,015 mM |
| Kaliumhydrogen-2-ketoglutarat | 1,0 mM |

Das Prinzip der HTK-Lösung beruht auf der Inaktivierung der Organfunktion durch Entzug von extrazellulärem Natrium und Calcium, verbunden mit der Pufferung des extrazellulären Milieus durch Histidin/Histidinhydrochlorid. Auf diese Weise wird die Zeitspanne verlängert, die die Organe die Unterbrechung der Versorgung mit sauerstoffhaltigem Blut tolerieren. Die Elektrolytzusammensetzung der HTK-Lösung hemmt die Auslösung energieverbrauchender Aktivierungsprozesse, so dass der Energiebedarf des Organs herabgesetzt wird. Der Puffer Histidin/Histidinhydrochlorid verlangsamt den pH-Abfall während der Ischämie, was den Wirkungsgrad der anaeroben Energiegewinnung erhöht. Kaliumhydrogen-2-ketoglutarat dient als Substrat für die aerobe Energiegewinnung, Tryptophan soll membranprotektiv wirken und Mannitol die Entstehung eines Zellödems verhindern. Die Eigenschaften einer solchen Lösung lassen sich durch Zusetzen der angegebenen Menge Ectoin/Hydroxyectoin optimieren.

Die Erfindung kommt bei der Transplantation von Niere, Leber oder Pankreas zum Einsatz. Möglich ist jedoch auch die Lagerung von zu transplantierenden Geweben, nämlich der Hornhaut (Cornea).

Die auf einer HTK-Lösung beruhende Lagerlösung kann weitere aus dem Stand der Technik bekannte Komponenten enthalten. Diesbezüglich wird insbesondere auf die europäischen Patente EP 1 362 511 B1 und 1 859 679 B1 verwiesen. Eine Lagerlösung nach Anspruch 1, die darüber hinaus in den genannten europäischen Patenten beschriebene Komponenten von Organlagerlösungen enthält, ist explizit ebenfalls Gegenstand dieser Anmeldung.

Insbesondere kann die Lagerlösung Hydroxamsäure oder ein Hydroxamsäurederivat enthalten, das ggf. alkyl- oder arylsubstituiert ist. Insbesondere geeignet ist Deferoxamin, bei dem es sich um einen starken Eisenchelator handelt und das gleich drei Hydroxamsäurefunktionen aufweist. Auf diese Weise wird einer eisenabhängigen Kälteschädigung vorgebeugt. Grundsätzlich können auch andere Eisenchelatoren zum Einsatz kommen. Ein Puffer kann auf der Basis von N-Acylhistidin, insbesondere N-Acetylhistidin sowie der entsprechenden Base verwendet werden.

Enthalten sein können Lysin, Arginin oder Glycin oder entsprechende Derivate, beispielsweise lysin-, arginin- oder glycinhaltige Dipeptide. Gleiches gilt für die übrigen natürlichen Aminosäuren Alanin, Valin, Leucin, Isoleucin, Methionin, Prolin, Phenylalanin, Tryptophan, Serin, Threonin, Asparagin, Asparaginsäure, Glutamin, Glutaminsäure, Tyrosin, Cystein und Histidin. Die basischen Aminosäuren Lysin und Arginin bzw. Derivate können als Basenäquivalente eingesetzt werden.

Auch der Zusatz von Aspartat, das den Stoffaustausch an Membranen unterstützt und die Wiederherstellung der Homöostase beschleunigt und darüber hinaus in Verbindung mit α-Ketoglutarat den aeroben Energiestoffwechsel in der Phase der Reperfusion begünstigt, ist vorteilhaft.

Um den Energiebedarf des Organs während der Ischämie zu decken, kann der Lagerlösung Glucose zugesetzt sein. Dabei muss die Glucosekonzentration so gewählt sein, dass eine exzessive Glucoseaufnahme durch andere Zellen vermieden wird. Auch andere Zucker, Zuckeralkohole oder sonstige Polyole (z. B. Mannitol, Raffinose, Saccharose, Xylitol, Sorbitol) oder hochmolekulare Substanzen wie HES oder Dextran können zum Einsatz kommen, um den erforderlichen physiologischen osmotischen Druck von ca. 300 mosm/l zu erreichen.

Dimethylsulfoxid (DMSO) kann als Kryoprotektivum verwendet werden. Radikalfänger wie Trolox (6-Hydroxy-2,5,7,8-tetramethylchroman-2-carbonsäure) können eingesetzt werden, um intrazelluläre Radikale abzufangen.

Selbstverständlich kann die erfindungsgemäße Lagerlösung nicht lediglich zur Aufbewahrung der Organe oder Gewebe verwendet werden, sondern auch zur Perfusion bei Entnahme des Organs aus dem Spenderkörper. Typischerweise wird das Organ mit der Lagerlösung perfundiert und anschließend bis zur Einpflanzung beim Empfänger in der Lagerlösung aufbewahrt und transportiert.

### Beispiel

Bei den durchgeführten Versuchen wurde männlichen Wistar-Ratten unter Isofluran-Narkose die Leber entfernt. Es wurde in drei Gruppen unterteilt:
Kontrollgruppe (NaCl-Gruppe): Keine warme oder kalte Ischämiezeit (n=5)

Testgruppe 1 (HTK-Gruppe): Die Lebern wurden nach einer warmen Ischämiezeit von 30 min mit 60 ml HTK-Lösung gespült (n=5)

Testgruppe 2 (HTK+Hydroxyectoin-Gruppe): Die Lebern wurden nach einer warmen Ischämiezeit von 30 min mit 60 ml HTK-Lösung gespült, die eine Hydroxyectoin-Konzentration von 5,27 mM aufwies (n=5)

In den Testgruppen wurde 30 min nach Herzstillstand mit einem 14-Gauge Polyethylenschlauch eine Kanüle zur Portalvene gelegt. Anschließend wurden die Lebern über die Portalvene mit 20 ml einer eisgekühlten Salzlösung (0,9 %, DeltaSelect GmbH, Dreieich, Deutschland) gespült. Danach wurden die Lebern entfernt und bei 4°C unmittelbar mit 60 ml HTK-Lösung (Dr. Franz Köhler Chemie, Deutschland) bzw. mit 60 ml HTK-Lösung, enthaltend 5,27 mM Hydroxyectoin gespült.

Die Lebern wurden in zusätzlichen 60 ml der jeweiligen Organlagerlösung bei 4°C für 24 h aufbewahrt. Während der Lagerung wurde ein kurzer 14-Gauge Polyethylenkatheter in die suprahepatische Vena cava eingeführt und gesichert.

Zur Simulierung der Erwärmung bei der Reimplantation wurden die Organe innerhalb von 30 min auf Raumtemperatur gebracht. Vor der Verbindung mit dem Perfusionskreislauf wurden die Lebern über den Portalvenenkatheter mit 10 ml Salzlösung bei 22°C für max. 35 min gespült. Auch der Perfusionskreislauf wurde mit 200 ml steriler Salzlösung und anschließend mit 100 ml Krebs-Henseleit-Puffer (KHB) gespült. Die Reperfusion wurde ex vivo für 45 min in einem rezirkulierenden System bei konstanter Flussrate von 3 ml pro Gramm Leber und Minute mit 220 ml oxygeniertem KHB bei 37°C durchgeführt.

Für die Oxygenierung wurde Carbogen (95 % O₂, 5 % CO₂) verwendet und der Perfusat-Sauerstoffpartialdruck wurde kontinuierlich bei über 500 mm Hg gehalten.

Die Kontrollgruppe (NaCl-Gruppe) wurde weder warmer noch kalter Ischämie ausgesetzt. Die Lebern wurden lediglich bei Entnahme mit NaCl- und HTK-Lösung gespült und sofort reperfundiert.

### Ergebnisse

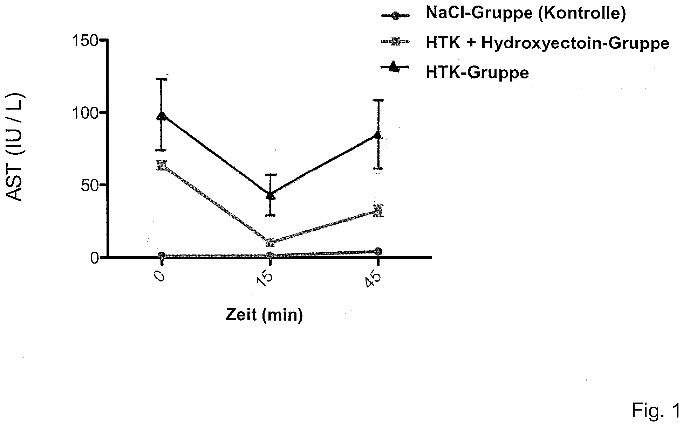

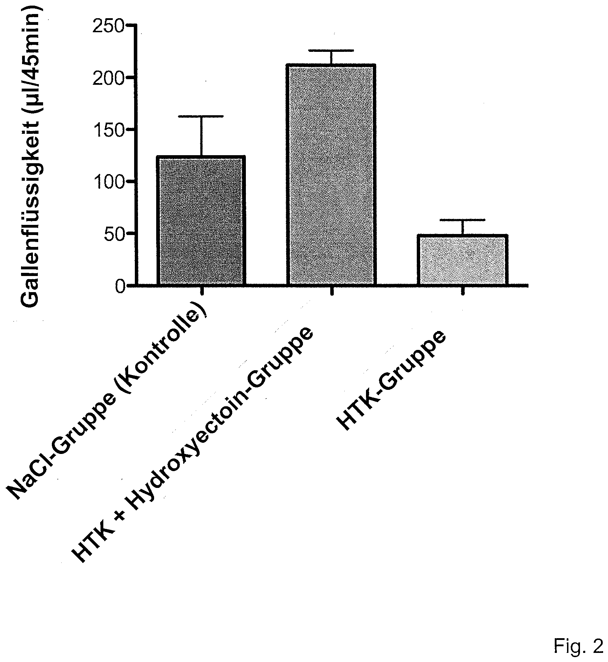

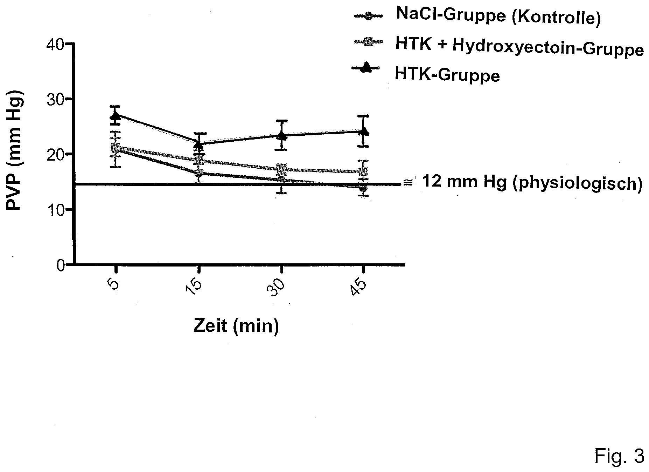

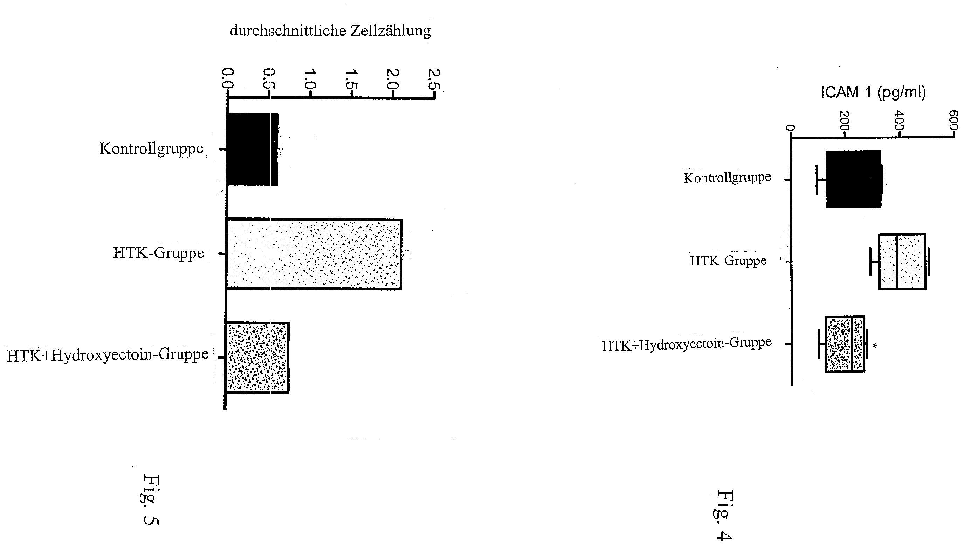

1) Das Enzym Aspartataminotransferase (AST) wandelt Aspartat und α-Ketoglutarat zu Oxalacetat und Glutamat bzw. umgekehrt um. Es wird zwischen zwei Isoenzymformen unterschieden, AST-1 und AST-2. Ein erhöhter Level im Blut ist normalerweise mit Leberfunktionsstörungen verbunden, weshalb sie als biochemische Marker für Leberschäden verwendet werden. Die Messung erfolgte mit Hilfe üblicher photometrischer Methoden in einem klinischen Analysator (Vitros 250, Ortho-Clinical-Diagnostics, New Jersey, USA). Das Ergebnis ist in Figur 1 dargestellt. Man erkennt, dass das AST-Level nach 15 und 45 min Reperfusion für die HTK-Gruppe signifikant höher war als für die HTK+Hydroxyectoin-Gruppe.
2) Gallenflüssigkeit ist eine dunkelgrüne oder gelb-braune Flüssigkeit, die von den Hepatozyten produziert wird. Mangels Gallenblase bei Ratten fließt sie unmittelbar durch den Gallengang. Ein Katheter wurde in den Gallengang eingeführt, um die Flüssigkeit während der Reperfusion aufzufangen. Die Menge an Gallenflüssigkeit steht in direktem Zusammenhang mit der Leberfunktion, wobei größere Mengen mit einer besseren Organfunktion korreliert sind. Die Produktion an Gallenflüssigkeit war für die HTK+Hydroxyectoin-Gruppe signifikant höher als für die HTK-Gruppe (vgl. Figur 2).
3) Der Portalvenendruck (Portal Venous Pressure, PVP) ist der in der Portalvene vorherrschende Druck. Normalerweise liegt er zwischen 5 und 12 mm Hg. Insofern ist er ein Maß für den Widerstand, der überwunden werden muss, um das Blut im Blutkreislauf zu pumpen. Der Portalvenendruck wurde während der Reperfusion kontinuierlich am Portalvenenausflusskatheter gemessen. Wie man Figur 3 entnehmen kann, ist der Portalvenendruck in der HTK+Hydroxyectoin-Gruppe niedriger als in der HTK-Gruppe.
4) ICAM-1 (Intercellular adhesion molecule 1) wurde bestimmt, um die Entzündungsreaktion von geschädigten sinusoidalen Endothelzellen zu bestimmen. Die Kontrollgruppe zeigte im Vergleich zur HTK-Gruppe signifikant niedrigere Level (242 ± 46.22 pg/ml im Vergleich zu 403,6 ± 39,61 pg/ml). Auch die HTK+Hydroxyectoin-Gruppe zeigte deutlich niedrigere Werte (305,2 ± 37,71) pg/ml gegenüber der HTK-Gruppe. Das Ergebnis wird in Figur 4 wiedergegeben (*: P < 0,05 ggü. HTK-Gruppe).
5) Apoptose wurde mit Hilfe der TUNEL (terminal deoxynucleotide transferase-mediated dUTP-biotin nick end labeling)-Methode sichtbar gemacht. Dabei werden die während der Apoptose entstehenden 3'-OH-Gruppen des fragmentierten DNA-Strangs durch die Transferase mit markierten Nucleotiden versehen. Es wurden ein Standardprotokoll und ein kommerziell erhältliches Kit (Boehringer Mannheim, Mannheim, Deutschland) mit Inkubation durch 3-Aminoethylcarbazol und Anfärbung durch Hämatoxylin angewandt. Das Ergebnis ist in Figur 5 zu erkennen. In der Kontroll-Gruppe wurden nur wenige positiv apoptotische Zellen beobachtet (0,6 ± 0,3 durchschnittliche Zellzählung), während in der HTK-Gruppe die Zahl signifikant erhöht ist (2,12 ± 0,13). Die HTK+Hydroxyectoin-Gruppe zeigt im Vergleich hierzu eine signifikant niedrigere Apoptoserate (0,76 ± 0,17).

Sämtliche Versuche wurden in Übereinstimmung mit den Tierschutzgesetzen der Bundesrepublik Deutschland durchgeführt. Es wurden die Prinzipien des Laboratory Animal Care (NIH, 1985) angewandt.

## Patentansprüche

1. Verwendung einer Lagerlösung zur Aufbewahrung von Transplantationsorganen oder Transplantationsgeweben, wobei die Lagerlösung Histidin, Tryptophan und α-Ketoglutarat oder entsprechende Salze enthält und die Transplantationsorgane oder Transplantationsgewebe ausgewählt sind aus der Gruppe bestehend aus Niere, Leber, Pankreas und Cornea, **dadurch gekennzeichnet, dass** die Lagerlösung Ectoin, Hydroxyectoin und/oder ein Salz des Ectoins oder Hydroxyectoins enthält.

2. Verwendung einer Lagerlösung nach Anspruch 1, **dadurch gekennzeichnet, dass** die Lagerlösung Hydroxyectoin enthält.

3. Verwendung einer Lagerlösung nach Anspruch 1 oder 2, **dadurch gekennzeichnet, dass** die Konzentration an Ectoin und/oder Hydroxyectoin 0,1 bis 100 mM beträgt.

4. Verwendung einer Lagerlösung nach Anspruch 3, **dadurch gekennzeichnet, dass** die Konzentration an Ectoin und/oder Hydroxyectoin 1 bis 10 mM beträgt.

5. Verwendung einer Lagerlösung nach Anspruch 4, **dadurch gekennzeichnet, dass** die Konzentration an Ectoin und/oder Hydroxyectoin 4 bis 7 mM beträgt.

6. Verwendung einer Lagerlösung nach Anspruch 5, **dadurch gekennzeichnet, dass** die Konzentration an Ectoin und/oder Hydroxyectoin ca. 5 mM beträgt.

## Claims

1. Use of a storage solution for the preservation of organs, tissue or organ systems to be transplanted, said storage solution containing histidine, tryptophan, and a-ketogiutarate or corresponding salts and wherein the organ or the tissue to be transplanted is selected of the group containing kidneys, liver, pancreas, and cornea,
c h a r a c t e r i z e d i n t h a t, the storage solution contains ectoine, hydroxyectoine and/or a salt of ectoine or hydroxyectoine.

2. Use of a storage solution according to claim 1, **characterized in that** the storage solution contains hydroxyectoine.

3. Use of a storage solution according to claim 1 or 2, **characterized in that** the concentration of ectoine and/or hydroxyectoine ranges between 0.1 and 100 mM.

4. Use of a storage solution according to claim 3, **characterized in that** the concentration of ectoine and/or hydroxyectoine ranges between 1 and 10 mM.

5. Use of a storage solution according to claim 4, **characterized in that** the concentration of ectoine and/or hydroxyectoine ranges between 4 and 7 mM.

6. Use of a storage solution according to claim 5, **characterized in that** the concentration of ectoine and/or hydroxyectoine is approx. 5 mM.

## Revendications

1. Utilisation d'une solution de stockage pour la conservation d'organes destinés à la transplantation ou de tissus destinés à la transplantation, la solution de stockage contenant de l'histidine, du tryptophane et de l'α-cétoglutarate ou des sels correspondants et les organes destinés à la transplantation ou les tissus destinés à la transplantation étant choisis dans le groupe constitué par le rein, le foie, le pancréas et la cornée,
**caractérisée en ce que** la solution de stockage contient de l'ectoïne, de l'hydroxyectoïne et/ou un sel de l'ectoïne ou de l'hydroxyectoïne.

2. Utilisation d'une solution de stockage selon la revendication 1, **caractérisée en ce que** la solution de stockage contient de l'hydroxyectoïne.

3. Utilisation d'une solution de stockage selon la revendication 1 ou 2, **caractérisée en ce que** la concentration d'ectoïne et/ou d'hydroxyectoïne vaut de 0,1 à 100 mM.

4. Utilisation d'une solution de stockage selon la revendication 3, **caractérisée en ce que** la concentration d'ectoïne et/ou d'hydroxyectoïne vaut de 1 à 10 mM.

5. Utilisation d'une solution de stockage selon la revendication 4, **caractérisée en ce que** la concentration d'ectoïne et/ou d'hydroxyectoïne vaut de 4 à 7 mM.

6. Utilisation d'une solution de stockage selon la revendication 5, **caractérisée en ce que** la concentration d'ectoïne et/ou d'hydroxyectoïne est d'environ 5 mM.
